**Europäisches Patentamt**

(19) **European Patent Office**

**Office européen des brevets**

(11) Numéro de publication: **0192012**
**B1**

(12) **FASCICULE DE BREVET EUROPEEN**

(45) Date de publication du fascicule du brevet:
**07.12.88**

(51) Int. Cl.⁴: **A 23 G 3/20,** A 23 P 1/08,
A 21 C 15/00

(21) Numéro de dépôt: **85430045.6**

(22) Date de dépôt: **23.12.85**

(54) Machines pour enrober uniformément en continu des produits de confiserie.

(30) Priorité: **09.01.85 FR 8500412**
**06.06.85 FR 8508702**

(43) Date de publication de la demande:
**27.08.86 Bulletin 86/35**

(45) Mention de la délivrance du brevet:
**07.12.88 Bulletin 88/49**

(84) Etats contractants désignés:
**AT BE CH DE FR GB IT LI LU NL SE**

(56) Documents cités:
**BE-A- 645 955**
**FR-A- 558 454**
**FR-A- 562 054**
**GB-A- 856 763**
**GB-A- 1 484 518**
**US-A- 1 374 938**
**US-A- 1 529 461**
**US-A- 1 794 346**
**US-A- 1 893 672**
**US-A- 1 985 842**
**US-A- 2 033 044**
**US-A- 3 561 981**
**US-A- 4 189 289**

(73) Titulaire: **TRANSITUBE PROJET Société anonyme dite:,**
**Joiibois la Blaque Chemin de la Blaque,**
**F-13090 Aix-en-Provence (FR)**

(72) Inventeur: **Rastoin, Blaise, 60, rue Rodocanacchi,**
**F-13008 - Marseille (FR)**

(74) Mandataire: **Azais, Henri et al, c/o CABINET BEAU DE**
**LOMENIE 14, rue Raphael, F-13008 Marseille (FR)**

ACTORUM AG

# Description

La présente invention a pour objet des machines pour enrober uniformément, en continu, des produits de confiserie comportant un noyau solide, ou gélatineux, ou pâteux enveloppé d'une ou plusieurs couches uniformes, d'un ou plusieurs produits liquide et/ou pulvérulents par exemple des bonbons, des biscuits d'apéritif, des céréales éclatées etc.

La fabrication de certains bonbons, notamment de ceux qui comportent un noyau en gélatine, comporte une opération au cours de laquelle ledit noyau est humecté uniformément par un liquide, coloré ou non, puis des particules de sucre en poudre sont collées uniformément sur la couche humide.

Ces opérations d'enrobage sont délicates. Il faut que les couches d'enrobage soient uniformes sur toute la périphérie du noyau. Il ne faut pas écraser ni briser les noyaux mous. Il faut éviter que les noyaus se collent entre eux.

A ce jour, les opérations d'enrobage sont effectuées dans une cuve ou un récipient hémisphérique ou cylindrique qui est entraîné en rotation autour de son axe à vitesse relativement lente et que l'on désigne dans le métier sous l'appellation de turbine.

On place dans la cuve une certaine quantité du produit à enrober, par exemple des noyaux en gélatine et on déverse dans la cuve, pendant qu'elle tourne, un ou plusieurs liquides, colorés ou non, qui imprègnent uniformément les noyaux en gélatine puis du sucre en poudre qui se colle sur la périphérie humectée des noyaux pour former un enrobage uniforme.

Dans la cuve, les noyaux tournent sur eux-mêmes, de telle sorte que le liquide puis les particules de sucre se répartissent uniformément à la périphérie de chaque noyau.

Après un certain temps de brassage, on arrête la rotation et on sort de la cuve les produits enrobés.

Cette technique est bien au point et elle permet d'obtenir un enrobage bien uniforme, sans altérer les produits tels que des noyaux en gélatine relativement fragiles. Toutefois, cette technique présente l'inconvénient d'être essentiellement discontinue.

On a choisi à titre d'exemple l'enrobage de bonbons mais le même problème d'enrobage se pose dans d'autres cycles de fabrication.

Par exemple, de nombreux biscuits d'apéritif sont fabriqués par extrusion de pâte à travers une filière après quoi les pâtons sont humectés d'un liquide puis saupoudrés de sel, de sucre ou d'épices.

Le brevet G. B. A. 856.763 (The City Bakeries) décrit un appareil pour enrober de sucre des produits de confiserie qui est composé d'une vis d'Archimède tournant dans une auge trapézoïdale. La vis est composée de tiges qui sont implantées radialement sur un arbre et qui portent des fils enroulés en hélice.

Le brevet U. S. A. 1.893.672 (L. G. James et al.) décrit une machine pour fabriquer des bonbons qui comporte une brosse hélicoïdale tournant dans une auge oscillante ayant un fond perforé. L'action combinée de la brosse et de l'auge oscillante sert à enlever l'amidon en excès.

Le brevet U. S. A. 1.374.938 (D. H. Mc Nulty) décrit une machine pour enrober des bonbons avec du sucre.

Cette machine comporte un tamis cylindrique rotatif qui tourne à l'intérieur d'une auge. La machine comporte une vis sans fin interne au tamis et des vis externes solidaires du tamis.

L'objectif de l'invention est de procurer des machines pour enrober en continu et de façon uniforme des produits de confiserie comportant un noyau solide, gélatineux ou pâteux enrobé dans un produit liquide et/ou pulvérulent.

Une machine selon l'invention est du type connu comportant une goulotte fixe, sensiblement horizontale, une vis sans fin qui est entraînée en rotation dans cette goulotte et des moyens pour introduire dans la goulotte les noyaux à enrober et des produits liquides et/ou pulvérulents.

L'objectif de l'invention est atteint au moyen d'une machine qui comporte une ou plusieurs brosses hélicoïdales qui sont composées de poils implantés radialement en hélice sur un ou deux arbres d'entraînement qui sont entraînés en rotation dans ladite goulotte à une vitesse inférieure à 100 tours/minute et ladite goulotte a la forme d'une auge qui est ouverte vers le haut, qui a une hauteur supérieure au diamètre desdites brosses et qui a un fond cylindrique qui enveloppe lesdites brosses dans la partie située au-dessous desdits arbres d'entraînement.

Selon un mode de réalisation préférentiel, une machine selon l'invention comporte deux brosses hélicoïdales de même diamètre composées de poils implantés radialement en hélice sur deux arbres d'entraînement parallèles qui sont entraînés en rotation en sens inverse l'un de l'autre et tels que les poils des deux brosses se déplacent de bas en haut dans la partie centrale de l'auge.

L'invention a pour résultat l'enrobage en continu des produits tels que des bonbons, des biscuits d'apéritif ou d'autres produits analogues nécessitant des opérations d'enrobage ou de saupoudrage.

Le procédé selon l'invention permet de construire des installations continues automatisées et de réduire les manutentions et la main d'œuvre donc le coût des fabrications.

L'enrobage est aussi uniforme que celui des produits fabriqués en discontinu dans les cuves tournantes appelées turbines qui sont utilisées couramment à ce jour.

Ce résultat est dû au fait que les produits à enrober qui sont déversés dans l'auge d'une machine selon l'invention tournent sans arrêt sur eux-mêmes, pendant qu'ils sont déplacés par la brosse hélicoïdale.

On constate que les produits en cours d'enrobage forment entre chaque paire de filets de la brosse hélicoïdale, un petit paquet qui tourne sans arrêt sur lui-même dans un espace restreint et, en même temps, chaque noyau tourne également sur lui-même à l'intérieur du paquet, de sorte que l'imprégnation des noyaux par un liquide puis par des particules solides se répartit uniformément sur toute la périphérie de chaque noyau.

La rotation des paquets de noyaux et des noyaux à l'intérieur des paquets est due à la poussée des poils de brosse sur les noyaux. Comme ces poils sont souples, cette poussée ne détériore pas les noyaux et ne les déforme pas même dans le cas où il s'agit de noyaux mous gélifiés ou pâteux.

Le fond de l'auge est cylindrique et les poils de la brosse frottent contre les parois de l'auge, ce qui a pour effet de balayer celles-ci et d'éviter que des dépôts n'y adhèrent.

Les parois latérales de l'auge sont verticales ou très légèrement divergentes vers l'extérieur, de sorte que les noyaux qui sont entraînés par la brosse le long de la paroi cylindrique et qui échappent ensuite à la brosse ne peuvent pas suivre la paroi verticale et retombent dans le fond de l'auge.

Finalement il se produit dans chaque intervalle entre deux filets successifs de la vis un effet de mini-turbine analogue à celui que l'on obtient dans les turbines discontinues utilisées à ce jour.

Une machine selon l'invention peut être utilisée pour enrober toutes sortes de produits par exemple pour enrober des amandes, des noisettes ou des cacahuètes. Dans ce cas, on commence par humecter les fruits grillés avec un liquide de fixation, par exemple un liquide à base d'alginate ou de l'huile, et ensuite on saupoudre de sucre ou de sel.

Les machines selon l'invention, comportant deux brosses hélicoïdales de pas inverse, montées sur deux arbres parallèles, présentent l'avantage que les produits en cours d'enrobage s'accumulent entre les deux brosses où se produit un effet de brassage intense desdits produits sans que ceux-ci ne viennent au contact des parois de l'auge.

Les machines selon l'invention comportant une ou deux parois latérales courbes qui prolongent le fond demi-cylindrique de l'auge audessus du plan horizontal dans lequel se situe l'axe ou les axes des arbres d'entraînement, présentent l'avantage de supprimer la nécessité de monter ces arbres sur des paliers et évitent les phénomènes d'auto-saturation de la machine dans le cas où le débit de produit à enrober est supérieur à la capacité de transport de la machine.

Les machines selon l'invention comportant un ou deux arbres d'entraînement portant chacun des poils qui sont implantés sur ledit arbre suivant deux hélices parallèles et intercalées, permettent d'augmenter le débit de la machine sans augmenter la vitesse de rotation.

Les machines selon l'invention équipées d'une rampe de pulvérisation ou de tout autre moyen équivalent pour distribuer un liquide de nettoyage sont des machines autonettoyantes qui permettent de passer rapidement de la fabrication d'un produit à celle d'un autre produit.

La description suivante se réfère aux dessins annexés qui représentent, sans aucun caractère limitatif, des exemples de réalisation de machines selon l'invention.

La figure 1 est une coupe longitudinale d'une machine à enrober selon l'invention.

La figure 2 est une vue partielle en perspective de l'extrémité avant de la même machine.

La figure 3 est une vue de dessus partielle d'une deuxième machine à enrober selon l'invention.

La figure 4 est une coupe transversale selon IV—IV de la figure 3.

La figure 5 est une coupe transversale d'une variante de machine selon la figure 3.

La figure 6 est une coupe transversale d'un autre mode de réalisation d'une machine selon la figure 1.

La figure 7 est une vue de dessus partielle d'une troisième machine selon l'invention.

La figure 8 est une coupe transversale d'une machine selon l'invention destinée à fabriquer des céréales éclatées.

Les figures 9 et 10 représentent respectivement une vue de dessus et une coupe transversale selon X—X d'une variante de construction d'une machine selon l'invention.

Les figures 11 et 12 représentent respectivement une vue de dessus et une coupe transversale selon XII—XII d'un dispositif d'introduction de noyaux en tête d'une machine selon l'invention.

Les figures 13 et 14 représentent respectivement des coupes longitudinale et transversale selon XIV—XIV d'une partie de machine selon l'invention pour cuire des produits alimentaires dans un bain d'huile.

Les figures 15 et 16 représentent respectivement une vue de dessus et une coupe transversale selon XVI—XVI d'une machine selon l'invention pour fabriquer des céréales éclatées.

Les figures 17 et 18 représentent des coupes transversales de machines selon l'invention.

Les figures 19 et 20 représentent une vue de dessus et une coupe transversale d'une variante de machine selon l'invention.

Les différentes figures représentent des machines destinées à enrober en continu des produits solides, avec des liquides tels qu'un sirop sucré, du miel ou de l'huile et/ou avec des produits pulvérulents tels que du sel, du sucre, du cacao dans des conditions telles que les produits solides soient enrobés uniformément par les produits liquides et/ou pulvérulents.

Les machines selon l'invention sont utilisées notamment dans la fabrication de produits de confiserie tels que des bonbons, des biscuits salés ou sucrés, des fruits secs enrobés de sucre ou de sel, et de façon générale, tout produit comportant un noyau solide, pâteux ou gélatineux qui doit être humidifié uniformément et/ou recouvert uniformément d'une ou plusieurs couches d'un produit pulvérulent.

Les machines selon l'invention peuvent servir, en outre, à fabriquer des produits qui nécessitent une étape de cuisson, par exemple des céréales éclatées du type pop-corn ou analogue.

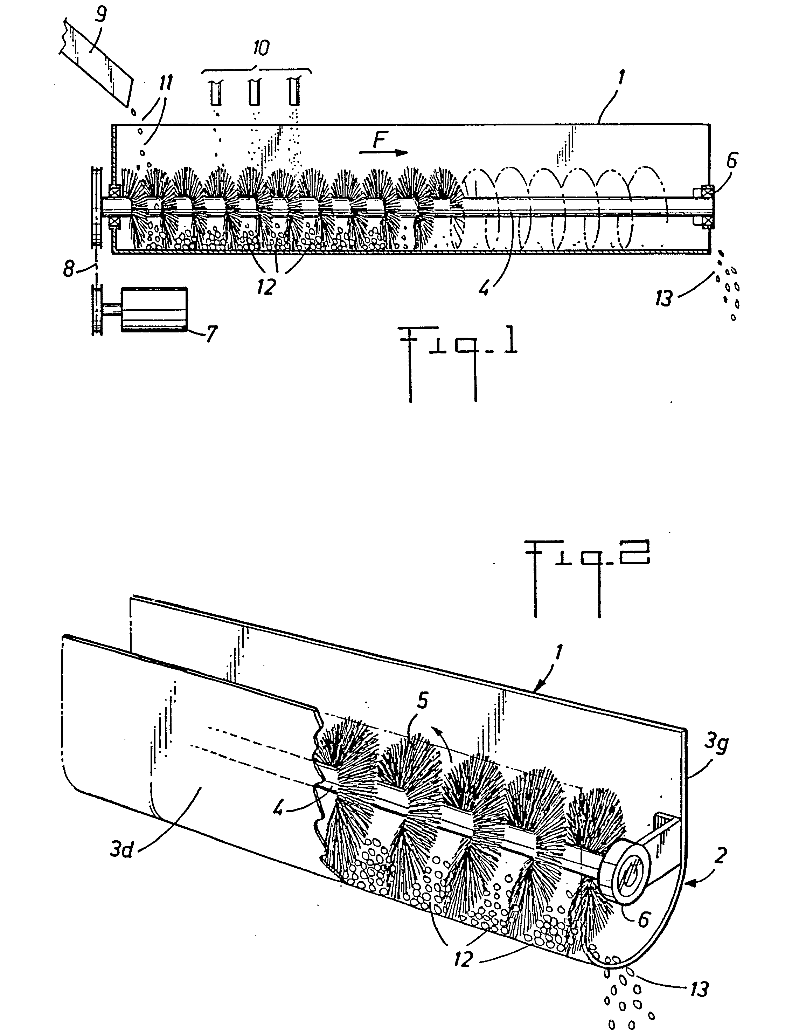

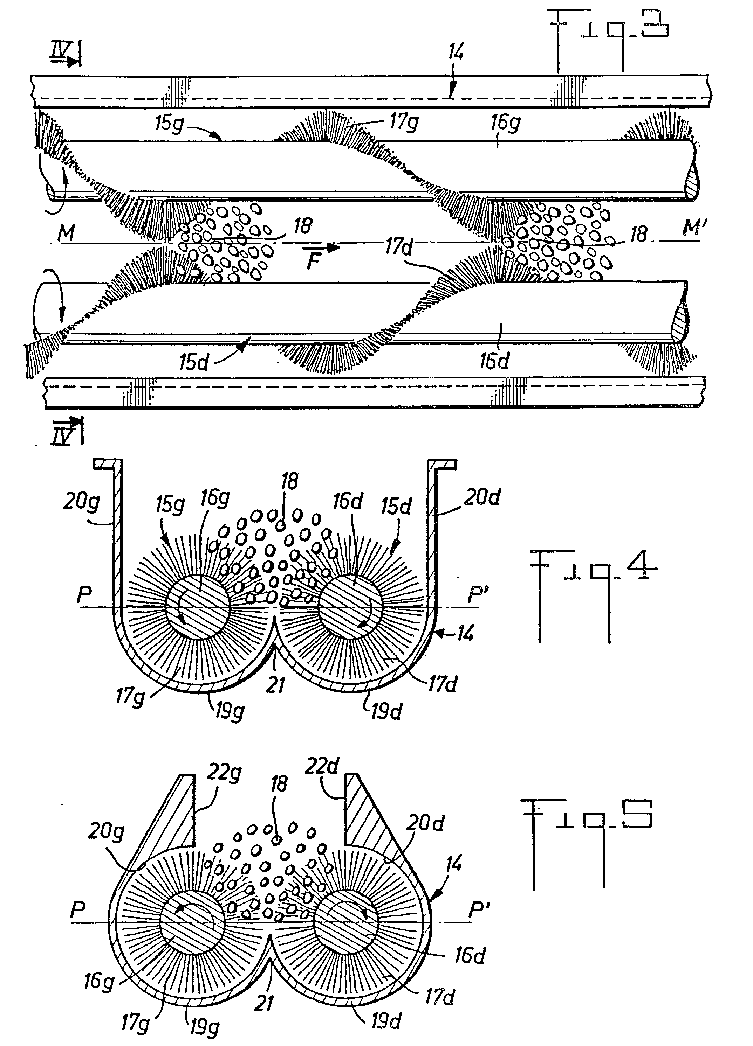

Les figures 1 et 2 représentent une machine qui comporte une goulotte en forme d'auge rectiligne 1, composée d'un fond 2 cylindrique, en forme de demi-cercle prolongé par deux parois latérales 3d et 3g, qui sont verticales dans l'exemple représenté.

En variante, les parois latérales pourraient diverger légèrement vers l'extérieur tout en restant voisines de la verticale. L'auge 1 est ouverte à la partie supérieure et à l'extrémité avant.

Une machine selon l'invention comporte, en outre, une vis sans fin qui est composée d'un arbre d'entraînement 4 et d'une brosse hélicoïdale 5, constituée par des poils souples, par exemple des crins ou des fibres synthétiques qui sont implantés en hélice sur l'arbre 4. Les deux extrémités de l'arbre 4 sont supportées par des paliers 6, par exemple par des roulements, qui sont disposés de telle sorte que l'arbre 4 et le fond demi-cylindrique 2 de l'auge soient sensiblement coaxiaux. La longueur des poils de la brosse 5 est légèrement supérieure au rayon du demi-cylindre 2, de sorte que les poils frottent contre les parois cylindriques de l'auge. La hauteur totale de l'auge 1 est de l'ordre de 1,5 fois le diamètre de la brosse hélicoïdale. L'arbre 4 est entraîné en rotation à vitesse lente, inférieure à 100 tours-minute, par un moteur électrique 7 et une transmission 8, par exemple une transmission par poulies et courroies dans le sens tel que les produits qui sont déversés dans l'auge soient entraînés vers l'extrémité de celle-ci.

Une goulotte 9 est située au-dessus de l'auge 1, à proximité de l'extrémité arrière, et elle déverse dans celle-ci des produits à enrober 11, par exemple des noyaux en gélatine de bonbons gélifiés ou bien des pâtons sortant d'une extrudeuse destinés à fabriquer des biscuits d'apéritif.

Le repère 10 représente des moyens d'injection dans l'auge de divers produits liquides ou pulvérulents. Par exemple, dans le cas où l'on doit imprégner des bonbons, on injecte d'abord un liquide coloré qui sert à humecter le noyau en gélatine pour le ramollir et à le colorer. On injecte ensuite du sucre en poudre qui se colle sur la surface humectée sur laquelle il doit former un enrobage uniformément réparti.

La goulotte 9 et les distributeurs 10 délivrent en continu un débit constant et la vis sans fin tourne en permanence, de sorte que l'opération d'enrobage est continue.

Les noyaux 11 qui tombent dans le fond de l'auge forment dans l'espace intermédiaire entre chaque paire de filets de la vis sans fin, un petit paquet 12 de noyaux. Ce paquet est poussé vers l'avant par la vis sans fin.

Les noyaux 11 qui sont en contact avec les poils de la brosse tournante, sont entraînés vers le haut le long de la paroi cylindrique de l'auge. Lorsqu'ils arrivent au niveau de l'arbre d'entraînement 4, ils ne sont plus entraînés et ils retombent vers l'intérieur de l'auge sous la poussée de ceux qui se situent au-dessous d'eux et qui sont entraînés vers le haut.

Il en résulte que chaque paquet 12 tourne continuellement sur lui-même pendant qu'il avance et chaque noyau torne également dans tous les sens à l'intérieur du paquet qui le contient. On obtient un effet de brassage identique à celui qui se produit dans les turbines discontinues qui sont utilisées à ce jour pour effectuer des enrobages uniformes.

Le procédé selon l'invention a l'avantage d'être continu. On recueille à la sortie de l'auge un flot continu de produits enrobés 13.

Une machine selon l'invention peut comporter plusieurs auges montées en cascade et équipées chacune d'une vis sans fin, de sorte que les produits sortant d'une auge tombent dans la suivante. Une telle machine permet de fabriquer des produits enrobés qui doivent comporter plusieurs pellicules d'enrobage successives de nature différente comme par exemple des dragées ou des pilules. Dans ce cas, on accélère le durcissement des couches d'enrobage en projetant sur les produits humectés un courant d'air chaud à la sortie de chaque auge.

Comme les poils de la brosse hélicoïdale 5 frottent contre la paroi interne de l'auge 1, ils balayent continuellement cette paroi, ce qui évite que des dépôts n'adhèrent à celle-ci. Cette fonction de brossage de la paroi est très importante car on enrobe le plus souvent avec des jus sucrés qui ont tendance à se coller aux parois et à donner naissance à une croûte solide et le brossage évite la formation d'une telle croûte, ce qui ne serait pas possible avec une vis sans fin rigide qui devrait être séparée de la paroi par un jeu dans lequel se formeraient des dépôts.

Par rapport à une vis sans fin rigide, une machine selon l'invention comportant une brosse hélicoïdale présente l'avantage que l'action des poils souples sur les noyaux à enrober qui sont généralement mous ne risque pas de déformer ceux-ci ou de les rayer, ce qui conduirait à des rebuts de fabrication.

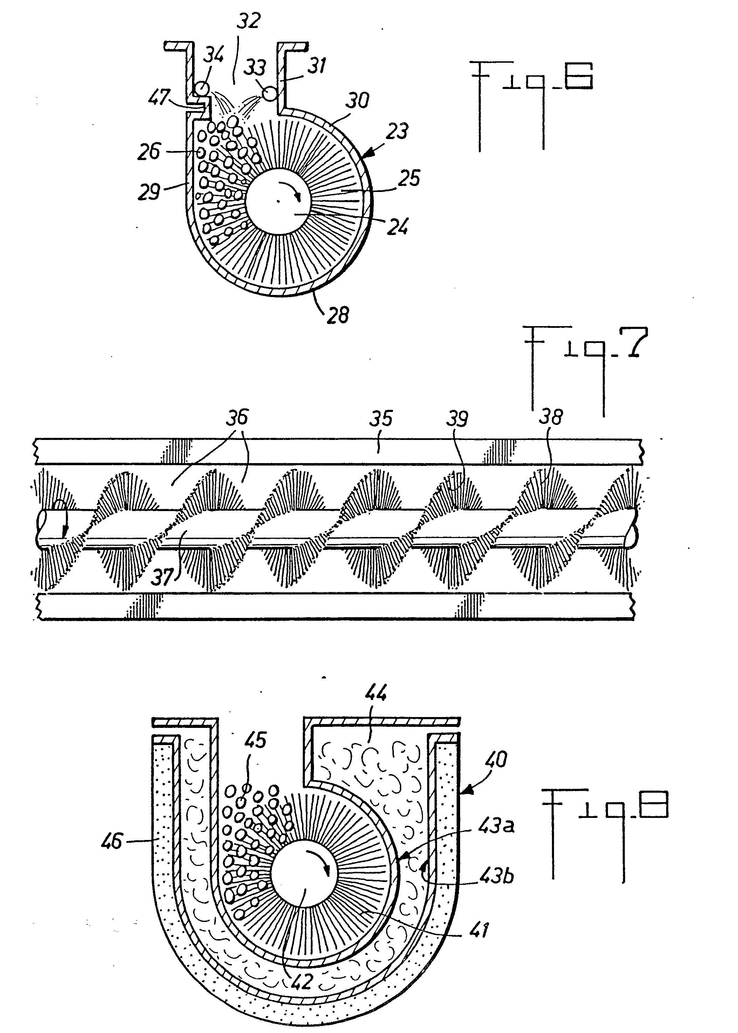

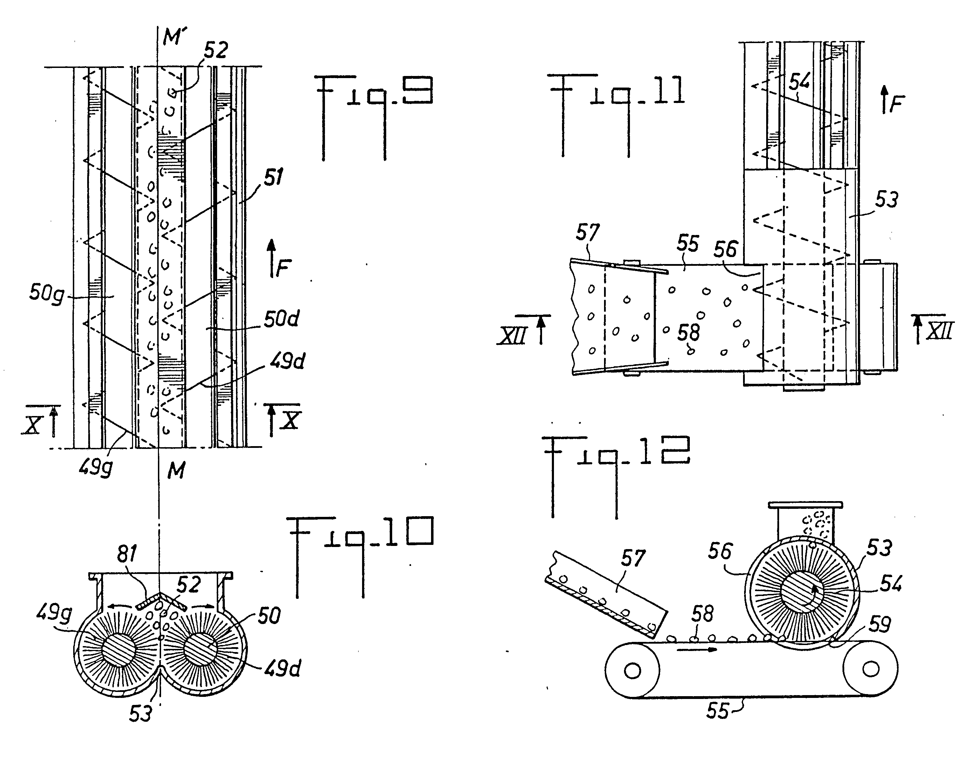

Les figures 3 et 4 représentent une deuxième machine selon l'invention qui comporte une auge rectiligne 14 ouverte vers le haut et à l'extrémité avant et deux brosses hélicoïdales 15d et 15g qui sont parallèles entre elles. Chaque brosse hélicoïdale comporte un arbre d'entraînement rectiligne rigide, respectivement 16d et 16g et des poils 17d, 17g implantés en hélice sur ledit arbre pour former une brosse hélicoïdale. Les poils peuvent être des crins animaux, des tiges végétales, des fibres synthétiques ou des fils métalliques.

Les deux hélices ont des pas égaux et de sens inverse. La flèche F représente le sens de déplacement des produits à enrober. Les noyaux solides de ces produits sont déversés dans l'auge à proximité de l'extrémité amont de celle-ci et ils sont déplacés dans le sens de la flèche, en formant des amas 18 en forme de boule qui tournent sur eux-mêmes en même temps qu'ils avancent, ce qui a pour effet que chaque noyau est enrobé uniformément par les liquides et/ou les solides pulvérulents qui sont déversés dans l'auge.

La figure 4 représente une coupe transversale orientée vers l'aval, c'est-à-dire en regardant dans le sens de déplacement des produits.

On voit sur les figures 3 et 4 que l'hélice 15g, située à gauche de la figure, a un pas à droite et est entraînée en rotation dans le sens contraire au pas, c'est-à-dire dans le sens contraire à celui des aiguilles d'une montre.

L'hélice 15d située à droite a un pas à gauche et elle est entraînée en rotation dans le sens des aiguilles d'une montre avec la même vitesse absolue de rotation.

Les deux hélices sont disposées symétriquement par rapport au plan médian longitudinal, c'est-à-dire sensiblement en opposition de phase l'une avec l'autre et elles sont sensiblement tangentes l'une à l'autre dans le plan médian.

On voit sur la figure 4 que les poils des deux brosses situés entre les deux arbres d'entraînement 16d et 16g, dans la partie où les deux brosses sont tangentes, se déplacent de bas en haut et c'est dans cette partie que les produits à enrober qui sont soulevés par les poils des brosses et qui retombent lorsqu'ils échappent à ceux-ci s'accumulent pour former un amas 18 qui est animé d'un mouvement de rotation sur lui-même. Comme on le voit sur la figure 3, il se forme dans l'espace délimité par les deux arbres d'entraînement 16g et 16d une suite d'amas 18 situés chacun en aval d'un point de tangence des deux brosses et chacun de ces amas remplit une fonction de miniturbine qui brasse continuellement les produits à enrober d'un bout à l'autre de l'auge 14 où ils sont évacués.

Avantageusement, comme on le voit sur la figure 4, le fond de l'auge 14 est composé de deux portions de cylindre accolées 19g et 19d qui enveloppent chacune une partie de la périphérie d'une vis jusqu'au niveau du plan PP' dans lequel se situent les axes des arbres 16g et 16d et qui se prolongent au-dessus de ce plan PP' par des parois 20d, 20g verticales ou inclinées.

Les deux demi-cylindres 19g et 19d sont symétriques par rapport au plan longitudinal médian et ils se recoupent dans celui-ci en formant une arête centrale 21 qui s'engage entre les deux hélices en restant tangente à celles-ci.

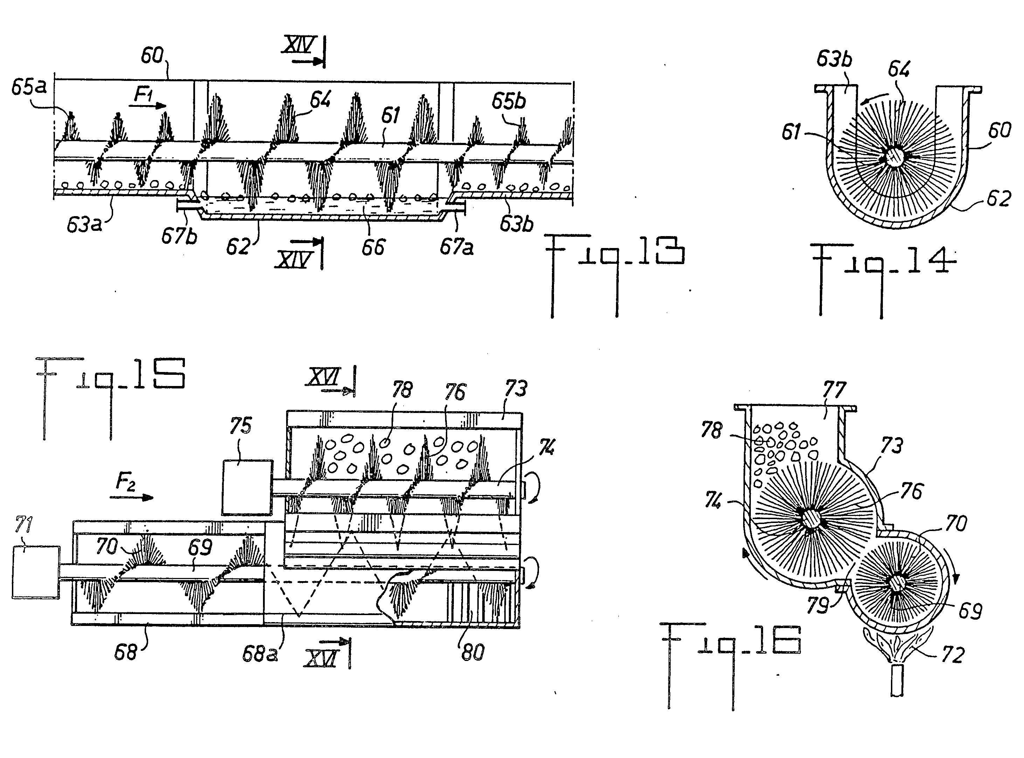

La figure 5 représente une coupe transversale d'une variante de réalisation.

Les parties homologues sont représentées par les mêmes repères sur les figures 4 et 5. Les hélices sont identiques.

Les deux parois latérales 20d et 20g de l'auge situées audessus du plan PP' ont la forme de portions de cylindre qui prolongent les portions de cylindre 19d et 19g, de sorte que chaque vis sans fin est enveloppée sur plus de la moitié de sa périphérie et avantageusement les trois quarts de sa périphérie comme le représente la figure 3. Cette forme particulière des parois latérales de l'auge présente l'avantage que les deux brosses sont maintenues en place dans le fond de l'auge par les parois latérales sans qu'il soit nécessaire de monter les arbres 16g et 16d dans des paliers pour empêcher les brosses de se soulever. On supprime ainsi les paliers qui freinent le déplacement des produits à enrober et qui perturbent la régularité du mouvement de brassage des amas de produits.

D'autre part, en cas de saturation de la machine, les produits à enrober peuvent monter dans la partie verticale de l'auge située entre les parois verticales ou légèrement inclinées sur la verticale, 22d, 22g qui s'étendent au-dessus des brosses.

Les produits échappent alors à l'action des brosses et on obtient ainsi une autorégulation du phénomène de saturation.

Les modes de réalisation selon les figures 3 à 5 qui comportent deux brosses parallèles, présentent l'avantage, par rapport aux machines comportant une seule brosse, que les amas 18 de produits à enrober se situent entre les deux brosses, sans aucun contact avec les parois de l'auge. On évite ainsi les frottements contre les parois qui peuvent abimer certains produits fragiles et qui peuvent entraîner un enrobage des produits non uniforme.

Par ailleurs, les machines à double hélice permettent d'augmenter le débit de la machine et la granulométrie des produits car l'espace situé entre les deux brosses dans lequel les amas de produits 18 se forment et se maintiennent est plus volumineux que l'espace compris entre les poils montant et une paroi latérale de l'auge où s'accumulent les produits dans le cas d'une machine à une seule brosse hélicoïdale.

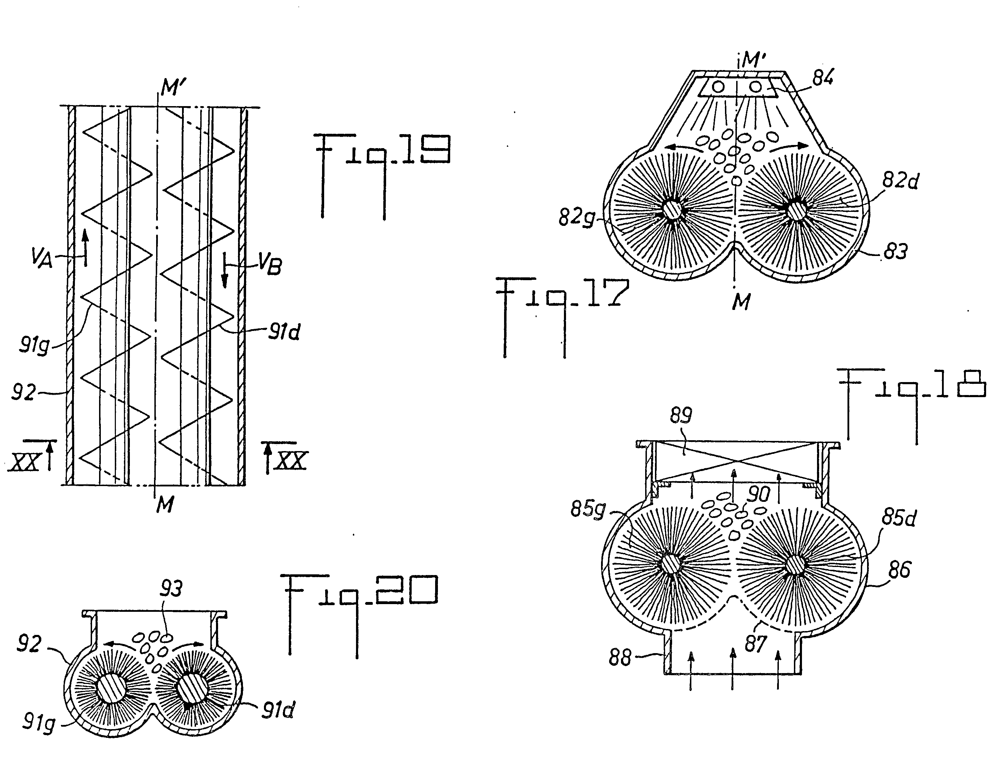

La figure 6 représente une coupe transversale regardant vers l'aval, c'est-à-dire dans le sens d'écoulement des produits, d'une machine selon l'invention comportant une seule brosse hélicoïdale composée d'un arbre d'entraînement 24 sur lequel est implantée une brosse hélicoïdale formée de poils 25.

La figure 6 correspond à une hélice ayant un pas à gauche qui est entraînée en rotation dans le sens des aiguilles d'une montre.

Les produits à enrober s'accumulent en formant un amas 26 le long de la paroi latérale de l'auge 23 qui est balayée par les poils de la brosse dans le sens montant. L'auge 23 a un fond 28 en forme de demi-cylindre qui épouse le contour de la brosse hélicoïdale. La paroi latérale 29 de l'auge située du côté qui est balayé en montant se raccorde tangentiellement au fond cylindrique 28. La paroi 30 de l'auge qui est balayée par la brosse hélicoïdale dans le sens descendant a la forme d'une portion de cylindre qui prolonge le fond cylindrique 28, de telle sorte que l'auge enveloppe la brosse hélicoïdale sur plus de la moitié de sa périphérie. Avantageusement, la paroi cylindrique 30 s'étend jusqu'à la verticale de l'axe de l'arbre 24, de sorte que l'auge enveloppe les trois quarts de la périphérie de la brosse.

La paroi cylindrique 30 est prolongée vers le haut par une paroi plane 31 qui peut être verticale ou légèrement oblique et qui délimite avec la paroi 29 une goulotte 32 surmontant la brosse. Cette disposition présente, dans le cas d'une machine à une seule brosse, les mêmes avantages que le mode de réalisation selon la figure 5.

La brosse hélicoïdale est maintenue dans le fond de l'auge par la paroi cylindrique 30 sans qu'il soit nécessaire de monter l'arbre 24 dans des paliers. De plus, en cas de saturation, les produits en excés montent dans la goulotte 32 où ils échappent à l'action de la brosse et la paroi 30 évite qu'ils ne soient entraînés en rotation autour de l'arbre 24 et qu'ils ne rejoignent l'amas qui les précède.

On a représenté sur la figure 6 un dispositif de nettoyage qui peut s'appliquer à toutes les machines selon l'invention.

Ce dispositif comporte une ou plusieurs rampes 33, 34 qui distribuent un liquide de nettoyage, par exemple de l'eau chaude, tout le long de l'auge. Ces rampes peuvent être des tubes perforés ou des tubes équipés de pulvérisateurs qui projettent des jets de liquide pulvérisé dans l'auge.

Les machines selon l'invention, notamment celles qui servent à fabriquer des produits enrobés de sucre, ont tendance à s'encrasser et il est nècessaire de les nettoyer après chaque poste de travail.

Pour cela, il suffit de mettre en route les rampes 33, 34 distributrices de liquide. Les poils de la brosse qui frottent contre les parois font alors fonction de brosse de nettoyage et les saletés sont entraînées vers la sortie de l'auge par la brosse hélicoïdale qui fait en même temps fonction de convoyeur. On obtient ainsi, avec des moyens peu onéreux, une machine à enrober autonettoyante permettant de procéder à un nettoyage poussé de la machine après chaque poste de travail ou entre des fabrications de produits différents.

La figure 7 représente une vue de dessus partielle d'une variante de réalisation d'une machine selon l'invention.

La figure 7 représente un exemple d'une machine comportant une auge 35 composée d'un fond en forme de demi-cylindre prolongé par deux parois latérales verticales.

Il est précisé que l'auge pourrait également avoir la forme représentée sur la figure 6.

Les machines à enrober selon l'invention tournent à des vitesses très lentes comprises entre 20 t/min et 100 t/min. Il en résulte que leur débit est très réduit. Pour augmenter le débit, l'idée qui vient naturellement à l'esprit est d'augmenter le pas, de sorte que la vitesse axiale de déplacement des produits augmente.

Mais en augmentant le pas, on aboutit à une distance accrue entre deux pas qui risque de contenir des amas de produit trop importants, qui tournent mal sur eux-mêmes, de sorte que l'enrobage n'est plus uniforme.

De plus, si les amas de produits sont trop gros, ils exercent une pression plus élevée contre les poils de la brosse hélicoïdale et comme ceux-ci sont souples, ils ont tendance à fléchir et à laisser échapper des produits qui rejoignent l'amas situé en amont.

La figure 7 représente une variante de réalisation qui permet d'augmenter le débit de la machine, sans augmenter la vitesse de rotation et sans augmenter le volume des amas individuels 36 de produits à enrober.

Selon cette variante, la machine comporte un arbre d'entraînement rigide 37 et deux brosses hélicoïdales 38 et 39, de même pas et de même sens qui sont entrecroisées, c'est-à-dire qu'elles sont décalées axialement d'un demi-pas. Ainsi, chaque fois que l'arbre tourne d'un tour, la machine débite deux amas 36 mais ceux-ci sont séparés par une nappe de poils pendant qu'ils progressent le long de l'auge.

On obtient ainsi un meilleur effet de turbine. Les amas 36 qui sont plus petits sont mieux brassés et l'enrobage est plus uniforme.

Pour un même débit de la machine, la quantité de produits dans chaque amas 36 est divisée par deux et chaque amas exerce donc une pression moins élevée sur la brosse. On peut ainsi obtenir un débit plus important tout en conservant une faible vitesse de rotation et un enrobage uniforme des produits.

Il est précisé que le mode de réalisation selon la figure 7 peut également être appliqué sur une machine selon la figure 3 qui comporterait alors deux arbres portant chacun deux brosses hélicoïdales entrecroisées.

La figure 8 représente une coupe transversale d'une variante de réalisation d'une partie de machine selon l'invention destinée à fabriquer des céréales éclatées du type pop-corn.

On rappelle que la fabrication de ces céréales comporte une étape d'enrobage dans de l'huile, éventuellement des étapes d'enrobage dans des produits tels que du miel ou du sucre et une étape d'éclatement au contact d'une paroi chauffée à une température comprise entre 120° et 150°.

La figure 8 représente une coupe de la partie de la machine dans laquelle a lieu l'éclatement, cette partie faisant suite à une partie où a eu lieu l'enrobage.

La figure 8 représente un exemple de machine comportant une auge 40 analogue à celle de la figure 6 et une seule hélice hélicoïdale.

Il est précisé que cet exemple n'est pas limitatif. Le mode de réalisation selon la figure 8 peut également comporter une auge ayant deux parois latérales planes ou une machine selon les figures 3 à 5 comportant deux vis sans fin parallèles ou une machine selon la figure 7 comportant deux brosses hélicoïdales entrecroisées.

La brosse hélicoïdale de la machine selon la figure 8 est composée de poils 41 qui sont des brins d'acier inoxydable qui sont implantés sur un arbre d'entraînement métallique 42 suivant une hélice ayant un pas à gauche.

La figure est une vue qui regarde dans le sens d'écoulement des produits, l'arbre 42 est entraîné dans le sens des aiguilles d'une montre.

L'auge 40 comporte une double paroi 43a, 43b qui délimite un espace intermédiaire 44 dans lequel on fait circuler un fluide caloporteur par exemple de la vapeur sèche ou une huile à une température de l'ordre de 150%, de sorte que les céréales 45 éclatent au contact de la paroi chaude. Le brassage des produits dû à l'action de la brosse fait que toutes les céréales viennent au contact de la paroi chaude et éclatent. Avantageusement, la paroi externe 43a porte un revêtement calorifuge 46.

En variante, au lieu d'utiliser une auge à double paroi dans laquelle circule un fluide caloporteur, on peut utiliser une auge métallique qui est chauffée localement par des flammes de brûleurs ou par des résistances électriques disposées à l'intérieur d'un caisson calorifugé.

On a représenté sur la figure 6 un exemple de réalisation dans lequel la paroi verticale 29, qui est balayée par les poils de la brosse dans le sens montant et contre laquelle s'accumulent les produits 26, comporte une nervure 47 en saillie à l'intérieur de la goulotte 32.

Cette nervure est disposée sensiblement au niveau de la génératrice supérieure de ladite brosse hélicoïdale 25.

On a remarqué que les produits à enrober qui frottent contre la paroi 29 ont tendance à se coller contre celle-ci et à continuer à monter le long de celle-ci sous la poussée de nouveaux produits. Il se forme ainsi à la longue une bande de produits collés à la paroi située au-dessus de la zone qui est balayée par la brosse. La nervure 47 évite la formation de cette bande de produits immobilisés contre la paroi.

Les produits situés au-dessous de la nervure 47 sont renouvelés en permanence par de nouveaux produits poussés par la brosse.

En ce qui concerne le mode de réalisation selon les figures 3 et 4, on a vu que les amas de produits 18 se forment entre les deux brosses hélicoïdales, sans être en contact avec les parois latérales de l'auge 14. Ceci évite que des produits ne se collent contre la paroi et progressent vers l'aval en restant collée à celle-ci, d'où un mauvais enrobage.

Les figures 9 et 10 représentent respectivement une vue de dessus partielle et une coupe transversale selon X—X d'une variante de réalisation d'une machine à enrober selon la figure 3.

Dans cette variante, la machine comporte deux brosses hélicoïdales 49d, 49g dont les arbres d'entraînement 50d, 50g sont disposés parallèlement dans le fond d'une auge 51. La flèche F indique le sens d'écoulement des produits.

Les deux brosses hélicoïdales ont des pas inverses. La brosse 49d est entraînée en rotation dans le sens des aiguilles d'une montre et elle a un pas à gauche. La brosse 49g est entraînée en rotation dans le sens contraire aux aiguilles d'une montre et elle a un pas à droite.

La figure 3 représente une machine dans laquelle les deux brosses sont disposées symétriquement par rapport au plan médian longitudinal MM'. La Figure 9 représente une variante dans laquelle les deux brosses hélicoïdales sont décalées longitudinalement l'une par rapport à l'autre.

Cette disposition a pour effet de provoquer un brassage plus intensif et un meilleur enrobage des produits. Les noyaux solides à enrober 52 progressent dans la zone centrale située entre les deux brosses hélicoïdales qui se déplacent de bas en haut et les noyaux subissent, dans cette zone, des mouvements de rotation continuels à la fois dans le sens longitudinal et dans le sens transversal qui conduisent à un enrobage très homogène sur toutes les faces du noyau.

Le brassage intensif des particules est amélioré en modifiant légèrement la forme du fond de l'auge qui comporte, entre les deux brosses, une nervure 53 de forme arrondie qui facilite le cheminement des particules.

Les figures 3 et 9 représentent des brosses hélicoïdales qui sont tangentes au plan médian MM'. Il est précisé que cette disposition n'est pas limitative. Les brosses peuvent être légèrement écartées du plan médian ou, au contraire, elles peuvent recouper légèrement le plan médian.

Les deux brosses d'une machine selon les figures 9 et 10, qui ont des pas et des sens de rotation inverses peuvent être entraînées en rotation soit à la même vitesse, soit à des vitesses différentes pour augmenter le brassage des noyaux.

On a représenté sur les figures 9 et 10 une machine équipée d'un dispositif 81, en forme de toit à double pente qui est symétrique par rapport au plan médian MM' et qui est situé au-dessus des deux brosses. Le dispositif 81 évite des projections de produits hors de l'auge et la formation de dépôts contre les parois verticales de l'auge. Le dispositif 81 peut être réalisé en plusieurs tronçons amovibles, ce qui permet d'enlever certains tronçons là où l'on désire introduire des produits dans l'auge.

Une machine selon l'invention est utilisée fréquemment pour enrober des noyaux mous gélatineux ou pâteux qui sont des produits fragiles et facilement déformables et l'introduction de ces produits dans la machine exige des précautions. Les noyaux mous ne peuvent être déversés verticalement dans l'auge car un grand nombre s'embrocheraient sur les fils de la broche et seraient brisés, ce qui conduirait à l'obtention d'un produit fini inacceptable.

Les figures 11 et 12 représentent un dispositif d'introduction de produits fragiles dans l'extrémité amont d'une machine selon l'invention qui comporte une auge 53 et une seule brosse hélicoïdale 54 qui a un pas à droite et qui est entraînée dans le sens contraire aux aiguilles d'une montre. L'extrémité amont de l'auge est située au-dessus d'un convoyeur à bande sans fin 55 qui se déplace perpendiculairement à l'axe de la brosse hélicoïdale. L'auge comporte une ouverture latérale dont la largeur est sensiblement égale à celle du convoyeur et cette ouverture est située du côté de l'auge qui est balayé par les poils de la brosse dans le sens descendant et elle fait face au convoyeur 55. Les poils de la brosse frottent contre le brin supérieur de la bande sans fin sur lequel se trouvent les produits 58 qui sont déversés par exemple par une goulotte 57. Le bord inférieur 59 de l'ouverture 56 est placé contre la face supérieure de la bande transporteuse. Les produits 58 sont poussés à l'intérieur de l'auge par les poils de la brosse et ils se rassemblent en amas dans la partie supérieure du bord de l'auge qui est balayé par les poils dans le sens ascendant.

Les figures 13 et 14 représentent une coupe longitudinale et une coupe transversale selon XIV–XIV d'une partie d'une machine selon l'invention, utilisée pour cuire en continu dans un bain d'huile chaude des produits alimentaires, par exemple des cacahuètes ou des amandes ou des pâtes extrudées.

La machine comporte une auge 60 en acier inoxydable ouverte sur le dessus, dans laquelle est disposé un arbre 61 en acier inoxydable entraîné en rotation à une faible vitesse inférieure à 50 tours/minute. L'arbre 61 porte des brosses hélicoïdales composées de brins d'acier inoxydable flexible qui sont implantés radialement et en hélice sur l'arbre 61.

L'auge 60 présente un tronçon central 62 intercalé entre deux tronçons 63a et 63b de section transversale plus réduite auxquelles elle se raccorde par une partie tronconique.

L'arbre 61 porte une brosse hélicoïdale 64 qui est disposée le long du tronçon central 62 et qui comporte des brins d'acier dont la longueur est sensiblement égale à la distance séparant la périphérie de l'arbre 61 du fond de l'auge 62. L'arbre 61 porte deux brosses hélicoïdales 65a et 65b de plus petit diamètre situées de part et d'autre de la brosse 64.

Le tronçon central 62 contient dans son fond un bain d'huile chaude 66 qui circule, de préférence, à contre-courant du sens de circulation des produits représenté par la flèche F1. Le bain chaud arrive dans le fond de l'auge par une entrée 67a et il sort par la sortie 67b. Le circuit dans lequel circule l'huile comporte une pompe de circulation, des moyens pour chauffer l'huile et un filtre pour arrêter les produits en suspension. La hauteur du bain d'huile 66 est maintenue inférieure à la profondeur du fond de l'auge 62 par rapport aux fonds des auges 63a et 63b, de sorte que l'huile reste dans l'auge centrale 62 où se réalise la cuisson des produits. Ceux-ci traversent lentement le tronçon central 62 en étant soumis à l'action de la brosse hélicoïdale 64 qui les fait avancer et qui les soumet en même temps à un brassage qui fait tourner les produits sur eux-mêmes, de sorte que l'on obtient une cuisson uniforme.

Une machine selon les figures 13 et 14 peut servir à cuire soit des produits plus lourds que l'huile, comme des cacahuètes, qui tombent au fond de l'auge 62, soit des produits plus légers qui flottent à la surface du bain. Les brins flexibles en acier des brosses hélicoïdales exercent une triple action d'avancement des produits, de brassage avec retournement et de balayage permanent des parois de l'auge contre lesquelles les brins frottent.

Les figures 15 et 16 représentent respectivement une vue de dessus et une coupe transversale selon XVI–XVI d'un autre mode de réalisation d'une machine selon l'invention qui sert à la fois à enrober et à cuire des produits alimentaires pour fabriquer notamment des céréales éclatées du type pop-corn.

La fabrication des céréales éclatées comporte une première opération au cours de laquelle des grains de maïs, de riz ou de blé sont enrobés d'huile et d'autres produits tels que du sucre, du sel, du miel, du chocolat puis ils sont chauffés pour les faire éclater.

Les figures 15 et 16 représentent une machine capable d'effectuer ces opérations successives.

Cette machine comporte une première auge 68 qui contient une première brosse hélicoïdale, constituée par un arbre en acier inoxydable 69, portant des brins d'acier inoxydable 70 implantés suivant une hélice ayant un pas à gauche. L'arbre 69 est entraîné en rotation dans le sens des aiguilles d'une montre par un moteur 71, à vitesse lente, inférieure à 100 t/minute.

Les céréales sont déversées dans l'auge 68 à l'extrémité située à gauche sur la figure et elles sont déplacées dans le sens de la flèche F2.

Pendant leur déplacement, les céréales forment des amas contre la paroi latérale de l'auge qui est balayée par les poils de la brosse dans le sens montant et elles tournent sur elles-mêmes, ce qui permet de les enrober uniformément d'huile, de miel ou de produits pulvérulents tels que du sel, du sucre, du cacao.

L'enrobage des céréales a lieu dans le tronçon de l'auge 68 situé à gauche de la figure et dans ce tronçon, l'auge comporte une ouverture, à sa partie supérieure, dans laquelle se forment les amas de céréales et le brassage de celles-ci comme on l'a expliqué précédemment.

L'auge 68 est prolongée vers la droite par un tronçon 68a, dans lequel a lieu l'éclatement des céréales. Ce tronçon d'auge a une paroi épaisse bonne conductrice de la chaleur, par exemple une paroi en cuivre et il est chauffé par exemple par la flamme 72 d'un brûleur ou par des résistances électriques ou par tout autre moyen de chauffage équivalent à une température suffisante pour faire éclater les céréales imprégnées d'huile.

La machine comporte une deuxième auge 73 qui est située au-dessus du tronçon 68a et qui est déportée latéralement par rapport à celui-ci. L'auge 73 contient un arbre 74 qui est entraîné en rotation dans le sens des aiguilles d'une montre, à vitesse inférieure à 100 t/minute par un moteur 75 et l'arbre 74 porte des brins d'acier inoxydable formant une brosse hélicoïdale 76 ayant un pas à gauche. L'auge 73 comporte dans sa partie supérieure une ouverture 77 ayant une paroi latérale verticale qui prolonge le fond circulaire de l'auge qui est balayé en montant par les poils de la brosse et les céréales éclatées forment des amas 78, situés entre les nappes de poils de la brosse et contre la paroi verticale de l'ouverture 77 comme on l'a expliqué précédemment.

Le fond circulaire de l'auge 73 et la brosse 76 ont un diamètre supérieur au diamètre du fond circulaire de l'auge 68, 68a et à celui de la brosse 70.

Comme on le voit sur la figure 16, le tronçon 68a de l'auge inférieure est fermé sur le dessus par une paroi circulaire qui comporte une ouverture latérale 79 qui vient se placer en regard d'une ouverture latérale du fond de l'auge 73, les deux auges étant fixées l'une à l'autre le long des deux bords longitudinaux de l'ouverture commune 79 par des vis, par soudure ou par tout autre moyen équivalent.

L'ouverture 79 de l'auge inférieure s'étend sensiblement sur tout le quadrant supérieur de l'auge qui est situé du côté qui est balayé en montant par la brosse 70.

Le fonctionnement est le suivant.

Les céréales déversées dans l'auge 68 sont enrobées uniformément d'huile et éventuellement d'autres produits pendant qu'elles se déplacent dans cette auge dans le sens de la flèche F2. Les céréales enrobées arrivent dans le tronçon chauffé 68a où elles éclatent. Leur volume augmente considérablement et leur densité diminue.

Les céréales éclatées sont entraînées par la brosse 70 vers l'ouverture 79 et sous l'effet de l'augmentation de volume et de la pression due aux éclatements, elles pénètrent dans le fond de l'auge 73 où elles sont balayées par les poils de la brosse 76 qui les entraînent vers le haut où elles forment les amas 78. Ainsi, les céréales éclatées sont évacuées au fur et à mesure de leur production hors du tronçon 68a où elles risqueraient d'être détériorées.

Grâce à son plus grand diamètre, la brosse 76 disposée dans l'auge 73 est capable d'absorber l'augmentation de volume due à l'expansion des céréales. Les céréales éclatées s'accumulent dans l'orifice 79 situé entre les deux auges avant d'être reprises par la brosse 76 et elles forment un écran qui réduit les pertes de chaleur hors de l'auge 68a et qui évite une trop grande élévation de température dans l'auge 73.

On a représenté sur la droite de la figure 15, une partie éclatée montrant une grille 80 qui est disposée dans le fond de l'auge 68a, à l'extrémité aval de celle-ci et qui permet d'évacuer les céréales non éclatées qui peuvent être recyclées. Les extrémités amont et aval de l'auge 68a sont fermées. L'extrémité amont de l'auge 73 est fermée tandis que l'extrémité aval est ouverte et sert à l'évacuation des produits. Il est possible d'enrober les céréales déjà éclatées pendant leur trajet dans l'auge 73.

Il est précisé que les brosses hélicoïdales simples représentées sur les figures 9, 11, 13 et 15 peuvent être remplacées par des doubles brosses hélicoïdales intercalées l'une dans l'autre et décalées d'un demi-pas comme celles qui sont représentées sur la figure 7.

La figure 17 représente une coupe transversale d'une variante de réalisation d'une machine selon l'invention comportant deux brosses hélicoïdales 82g et 82d, tournant en sens inverse l'une de l'autre, disposées dans une auge 83. Les parois latérales de l'auge ont, dans la partie inférieure, une forme cylindrique qui enveloppe les brosses hélicoïdales.

Ces parois cylindriques se prolongent vers le haut, au-dessus de la génératrice supérieure des brosses, par deux parois planes qui sont symétriques par rapport au plan MM' et qui convergent vers ce plan en montant. La machine comporte une source de chaleur rayonnante 84, constituée par exemple par un émetteur d'infrarouge qui est située au-dessus de la partie intermédiaire entre les deux brosses dans laquelle les produits à enrober s'accumulent. Ces produits sont soumis en permanence à l'action des rayonnements infrarouge et grâce à la rotation des produits due à l'effet mini-turbine, les produits soumis au rayonnement se renouvellent et présentent successivement toutes leurs faces au rayonnement infrarouge, ce qui permet de sécher uniformément l'enrobage des produits.

La figure 18 représente une coupe transversale d'une variante de réalisation d'une machine selon l'invention comportant une section de refroidissement des produits par un courant d'air froid ou de séchage par un courant d'air chaud.

Cette machine comporte, comme la précédente, deux brosses hélicoïdales 85g, 85d tournant en sens inverse, disposées dans une auge fixe 86 ayant des parois cylindriques qui enveloppent la partie externe des brosses hélicoïdales.

La partie centrale 87 du fond de l'auge est perforée et elle communique avec une gaine 88 qui souffle de l'air froid ou chaud selon les applications.

L'auge comporte des moyens d'extraction d'air, par exemple une gaine d'aspiration 89 qui est placée au-dessus des brosses et qui est supportée par les parois verticales de l'auge 86.

L'air qui arrive par la gaine 88 passe à travers le fond perforé 87 puis à travers les produits 90 qui sont concentrés dans la partie centrale située entre les deux brosses et il est repris par la gaine 89. Le brassage intensif des produits 90 permet un refroidissement ou un séchage très rapide de ceux-ci sur toutes leurs faces.

Les figures 19 et 20 représentent une vue de dessus partielle et une coupe transversale d'une variante de réalisation d'une machine selon l'invention.

Les figures 3 et 9 représentent des machines qui comportent deux brosses hélicoïdales entraînées en rotation en sens inverse l'une de l'autre et ayant des pas de sens inverse, de sorte que les deux brosses entraînent longitudinalement les produits dans le même sens.

Dans le cas de la figure 3, les vitesses de rotation des deux brosses sont égales et les vitesses de translation aussi.

Dans le cas de la figure 9, les vitesses de translation peuvent être inégales, soit que les vitesses de rotation soient inégales, soit que les pas aient des longueurs différentes.

Les figures 19 et 20 représentent une variante de réalisation d'une machine comportant deux brosses hélicoïdales 91d, 91g, placées dans une même auge 92, dans laquelle les deux brosses hélicoïdales sont toujours entraînées en rotation en sens inverse l'une de l'autre, de telle sorte qu'elles se déplacent en montant dans la partie centrale, mais les pas des deux brosses sont de même sens, de telle sorte que les brosses entraînent les produits longitudinalement avec des vitesses de translation de sens inverse et inégales.

Par exemple, la brosse 91g, qui tourne dans le sens inverse des aiguilles d'une montre, a un pas à droite et elle entraîne les produits avec une vitesse de translation représentée par la flèche VA, tandis que la brosse 91d, qui tourne dans le sens des aiguilles d'une montre, a également un pas à droite et elle entraîne les produits en translation avec une vitesse VB qui est de sens inverse à la vitesse VA et qui est nettement inférieure en valeur absolue à VA.

De préférence, la vitesse VA est supérieure à deux fois VB.

Dans le cas de la figure, les pas des deux brosses sont égaux et on obtient la différence de vitesse en faisant tourner la brosse 91d moins vite que la brosse 91g. En variante, la brosse 91d peut avoir la même vitesse de rotation que la brosse 91g, mais un pas plus court.

Dans tous les cas, le produit du pas par la vitesse de rotation d'une brosse est nettement supérieur au produit du pas par la vitesse de rotation de l'autre brosse.

Grâce à cette disposition, les noyaux 93 qui s'amassent entre les deux brosses sont entraînés alternativement par l'une ou l'autre des deux brosses, tantôt dans un sens, tantôt dans l'autre, de sorte qu'ils suivent un parcours sinueux comportant des boucles et ils séjournent plus longtemps dans la machine. Comme la vitesse VA est nettement supérieure à VB, la vitesse moyenne des noyaux est dirigée suivant VA.

Une machine selon les figures 19 et 20 permet d'obtenir un enrobage très uniforme avec des brosses de longueur réduite. Elle permet également d'enrober de faibles débits de noyaux.

## Revendications

1. Machine pour enrober uniformément, en continu, des produits de confiserie (11) comportant un noyau solide ou gélatineux ou pâteux, enrobé dans des produits liquides et/ou pulvérulents, du type comportant une goulotte fixe, sensiblement horizontale, une vis sans fin qui est entraînée en rotation dans ladite goulotte et des moyens pour introduire dans ladite goulotte lesdits noyaux et lesdits produits liquides et/ou pulvérulents, caractérisée en ce qu'elle comporte une ou plusieurs brosses hélicoïdales qui sont composées de poils (5) implantés radialement en hélice sur un ou deux arbres d'entraînement (4) qui sont entraînés en rotation dans ladite goulotte (1) à une vitesse inférieure à 100 tours/minute et ladite goulotte a la forme d'une auge qui est ouverte vers le haut, qui a une hauteur supérieure au diamètre desdites brosses et qui a un fond cylindrique qui enveloppe lesdites brosses dans la partie située au-dessous desdits arbres d'entraînement.

2. Machine selon la revendication 1, caractérisée en ce qu'elle comporte deux brosses hélicoïdales (15d, 15g) de même diamètre, composées de poils implantés radialement en hélice sur deux arbres d'entraînement parallèles (16d, 16g) qui sont entraînés en rotation en sens inverse l'un de l'autre et tels que les poils des deux brosses se déplacent de bas en haut dans la partie centrale de l'auge.

3. Machine selon l'une quelconque des revendications 1 et 2, caractérisée en ce que l'une au moins des parois latérales (20d, 20g) de ladite auge (14) qui est balayée par les poils de brosse dans le sens descendant a une forme cylindrique qui prolonge le fond cylindrique (19d, 19g) de ladite auge et qui enveloppe l'une au moins desdites brosses (17d, 17g) dans la partie située au-dessus des arbres d'entraînement (16d, 16g).

4. Machine selon l'une quelconque des revendications 1 à 3, caractérisée en ce qu'elle comporte plusieurs brosses hélicoïdales qui sont composées de poils qui sont implantés radialement sur un même arbre (37) suivant deux hélices intercalées (38, 39), c'est-à-dire suivant deux hélices parallèles et de même pas qui sont décalées axialement l'une par rapport à l'autre.

5. Machine selon la revendication 2, caractérisée en ce que les deux brosses (17d, 17g) ont des pas de même sens et le produit du pas par la vitesse de rotation d'une brosse est supérieur au produit du pas par la vitesse de rotation de l'autre brosse.

6. Machine selon l'une quelconque des revendications 1 à 5, destinée à fabriquer des céréales éclatées, caractérisée en ce qu'elle comporte un tronçon chauffé dans lequel lesdits poils sont des brins d'acier inoxydable et dans lequel les parois (43a) de l'auge sont chauffées à une température comprise entre 120 °C et 150 °C.

7. Machine selon l'une quelconque des revendications 1 à 6, destinée à cuire lesdits produits dans un bain d'huile chaude, caractérisée en ce que ladite auge comporte un tronçon central (62) qui est intercalé entre deux autres tronçons (63a, 63b) dont le fond est situé plus haut que le fond dudit tronçon central et ladite brosse hélicoïdale comporte un arbre en acier inoxydable (61) sur lequel sont implantés des brins d'acier inoxydable qui forment une brosse centrale (64), qui est située dans ledit tronçon central et deux brosses latérales (65a, 65b) qui encadrent ladite brosse centrale (64) et les brins de ladite brosse centrale sont plus longs que ceux desdites brosses latérales.

8. Machine selon la revendication 6, caractérisée en ce qu'elle comporte une deuxième auge (73) contenant une deuxième brosse hélicoïdale (76) qui est parallèle audit tronçon chauffé (68a) et qui est déportée vers le haut par rapport à celui-ci et ledit tronçon chauffé comporte une enveloppe cylindrique (68a) qui communique par une ouverture latérale (79) avec la deuxième auge, laquelle ouverture est située dans le quart supérieur de ladite enveloppe cylindrique qui est balayé en montant par la brosse hélicoïdale du tronçon chauffé et dans le quart inférieur de ladite deuxième auge qui est balayé en descendant par la deuxième brosse hélicoïdale.

9. Machine selon l'une quelconque des revendications 1 à 5, caractérisée en ce qu'elle comporte un dispositif d'introduction desdits noyaux dans l'extrémité amont de ladite auge, lequel dispositif comporte un convoyeur à bande (55) qui est situé au-dessous de ladite goulotte, laquelle présente la forme d'une enveloppe cylindrique (53) ayant une ouverture latérale (56) qui est située dans une paroi latérale qui est balayée par une brosse dans le sens descendant et le bord inférieur (59) de ladite ouverture est placé contre la face supérieure dudit convoyeur (55).

10. Machine selon la revendication 2, caractérisée en ce que ledit fond cylindrique de ladite auge est composé de deux portions de cylindre accolées (19d, 19g) qui enveloppent chacune une partie d'une brosse (17d, 17g) et qui forment dans la partie centrale une nervure en relief (21, 53) qui s'engage entre les deux brosses.

11. Machine selon l'une quelconque des revendications 2 à 5, caractérisée en ce qu'elle comporte un tronçon équipé d'une source de chaleur rayonnante (84), qui est située au-dessus de la partie intermédiaire entre les deux brosses (82g, 82d) afin de sécher les produits enrobés.

12. Machine selon l'une quelconque des revendications 2 à 5, caractérisée en ce qu'elle comporte un tronçon dans lequel le fond de l'auge comporte des perforations (87) qui communiquent avec une gaine (88) de soufflage d'air chaud ou froid et ledit tronçon est équipé d'un moyen d'aspiration d'air (89) qui est situé au-dessus desdites brosses, de sorte qu'un courant d'air chaud ou froid circule à travers les produits en cours de brassage pour sécher ou refroidir ceux-ci.

13. Machine selon l'une quelconque des revendications 2 à 5, caractérisée en ce qu'elle comporte un déflecteur longitudinal (81) en forme de toit à double pente qui est situé au-dessus de la partie intermédiaire entre les deux brosses.

14. Machine selon la revendication 2, caractérisée en ce que, pour un observateur qui regarde dans le sens d'écoulement des produits, la brosse (16d) située à sa droite, est entraînée en rotation dans le sens des aiguilles d'une montre et a un pas à gauche et la brosse (16g) située à sa gauche, est entraînée en rotation dans le sens inverse des aiguilles d'une montre et a un pas à droite et les produits du pas par la vitesse de rotation des deux brosses sont égaux.

**Patentansprüche**

1. Maschine zum kontinuierlichen gleichmässigen Umhüllen von Konfiserieprodukten (11) mit einem festen oder gelatinösen oder pastenartigen Kern, umhüllt in flüssigen und/oder pulverigen Produkten, des Typs umfassend eine im wesentlichen horizontale ortsfeste Rinne, eine in der Rinne rotationsbetriebene Endlosschnecke und Mittel zum Einbringen der Kerne und der flüssigen und/oder pulverigen Produkte in die Rinne, dadurch gekennzeichnet, dass sie eine oder mehrere Schraubenbürsten umfasst, die durch in Schraubenform radial auf einer oder zwei Antriebswellen (4) eingesetzte Borsten (5) gebildet sind, welche Antriebswellen in der Rinne (1) mit einer Geschwindigkeit von weniger als 100 Umdrehungen/Minute rotationsbetrieben sind, und dass die Rinne die Form eines nach oben hin offenen Trogs hat, der eine Höhe grösser als der Durchmesser der Bürsten und einen die Bürsten in dem unterhalb der Antriebswellen befindlichen Teil umgebenden zylindrischen Boden aufweist.

2. Maschine nach Anspruch 1, dadurch gekennzeichnet, dass sie zwei Schraubenbürsten (15d, 15g) vom selben Durchmesser umfasst, die durch in Schraubenform radial auf zwei parallelen Antriebswellen (16d, 16g) eingesetzten Borsten gebildet sind, welche Antriebswellen in zueinander entgegengesetztem Sinn und derart rotationsbetrieben sind, dass sich die Borsten der beiden Bürsten im zentralen Teil des Trogs von unten nach oben bewegen.

3. Maschine nach einem der Ansprüche 1 und 2, dadurch gekennzeichnet, dass zumindest eine der Seitenwände (20d, 20g) des Trogs (14), die von den Borsten der Bürste in Richtung abwärts bestrichen ist, eine zylindrische Form hat, die den zylindrischen Boden (19d, 19g) des Trogs verlängert und zumindest eine der Bürsten (17d, 17g) in dem oberhalb der Antriebswellen (16d, 16g) befindlichen Teil umgibt.

4. Maschine nach einem der Ansprüche 1 bis 3, dadurch gekennzeichnet, dass sie mehrere Schraubenbürsten umfasst, die aus radial auf ein- und derselben Welle (37) entlang zweier ineinandergelegter Schraubenlinien (38, 39) eingesetzten Borsten gebildet sind, d. h. entlang zweier paralleler Schraubenlinien, die dieselbe Steigung haben und axial zueinander versetzt sind.

5. Maschine nach Anspruch 2, dadurch gekennzeichnet, dass die beiden Bürsten (17d, 17g) Steigungen gleicher Richtung haben und das Produkt aus der Steigung mit der Rotationsgeschwindigkeit einer Bürste grösser als das Produkt aus der Steigung mit der Rotationsgeschwindigkeit der anderen Bürste ist.

6. Maschine nach einem der Ansprüche 1 bis 5 zur Erzeugung von Puffgetreide, dadurch gekennzeichnet, dass sie einen Heizabschnitt umfasst, in welchem die Borsten Drähte aus rostfreiem Stahl sind und in welchem die Wände (43a) des Trogs auf eine Temperatur zwischen 120°C und 150°C erhitzt sind.

7. Maschine nach einem der Ansprüche 1 bis 6 zum Braten der Produkte in einem heissen Ölbad, dadurch gekennzeichnet, dass der Trog einen zentralen Abschnitt (62) umfasst, der zwischen zwei weiteren Abschnitten (63a, 63b) zwischengeschaltet ist, deren Boden höher liegt als der Boden des zentralen Trogs, und dass die Schraubenbürste eine Welle (61) aus rostfreiem Stahl umfasst, auf der Drähte aus rostfreiem Stahl eingesetzt sind, die eine im zentralen Abschnitt befindliche zentrale Bürste (64) und zwei die zentrale Bürste (64) begrenzende seitliche Bürsten (65a, 65b) bilden, und dass die Drähte der zentralen Bürste länger sind als jene der seitlichen Bürsten.

8. Maschine nach Anspruch 6, dadurch gekennzeichnet, dass sie einen zweiten Trog (73) umfasst, der eine zweite Schraubenbürste (76) enthält, die parallel zum Heizabschnitt (68a) verläuft und in bezug auf diesen nach oben hin verschoben ist, und dass der Heizabschnitt eine zylindrische Hülle (68a) umfasst, die über eine seitliche Öffnung (79) mit dem zweiten Trog kommuniziert, welche Öffnung sich im oberen Viertel der zylindrischen Hülle befindet, die von der Schraubenbürste des Heizabschnitts aufwärts bestrichen ist, und im unteren Viertel des zweiten Trogs, der von der zweiten Schraubenbürste abwärts bestrichen ist.

9. Maschine nach einem der Ansprüche 1 bis 5, dadurch gekennzeichnet, dass sie eine Einrichtung zum Einbringen der Kerne in das stromaufwärtige Ende des Trogs umfasst, welche Einrichtung ein Förderband (55) umfasst, welches sich unterhalb der Rinne befindet, die die Form einer zylindrischen Hülle (53) mit einer seitlichen Öffnung (56) aufweist, welches sich in einer Seitenwand befindet, die von einer Bürste in absteigender Richtung bestrichen ist, und der untere Rand (59) der Öffnung an der Oberseite des Förderers (55) anliegt.

10. Maschine nach Anspruch 2, dadurch gekennzeichnet, dass der zylindrische Boden des Trogs aus zwei aneinandergefügten Zylinderteilen (19d, 19g) zusammengesetzt ist, die jeweils einen Teil einer Bürste (17d, 17g) umgeben und die im zentralen Teil eine erhabene Rippe (21, 53) bilden, die zwischen die beiden Bürsten geschoben ist.

11. Maschine nach einem der Ansprüche 2 bis 5, dadurch gekennzeichnet, dass sie einen Abschnitt mit einer Strahlungswärmequelle (84) umfasst, die oberhalb des Zwischenteils zwischen den beiden Bürsten (82g, 82d) zum Trocknen der umhüllten Produkte angeordnet ist.

12. Maschine nach einem der Ansprüche 2 bis 5, dadurch gekennzeichnet, dass sie einen Abschnitt umfasst, in welchem der Boden des Trogs Löcher (87) aufweist, die mit einer Hülse (88) zum Einblasen von Heiss- oder Kaltluft kommunizieren, und dass der Abschnitt mit einem Luftansaugmittel (89) ausgestattet ist, das sich oberhalb der Bürsten befindet, so dass ein Heiss- oder Kaltluftstrom durch die umhergewirbelten Produkte zum Trocknen oder Kühlen derselben zirkuliert.

13. Maschine nach einem der Ansprüche 2 bis 5, dadurch gekennzeichnet, dass sie ein längliches Ablenkblech (81) in Form eines zweihängigen Daches umfasst, das sich oberhalb des Zwischenteils zwischen den beiden Bürsten befindet.

14. Maschine nach Anspruch 2, dadurch gekennzeichnet, dass für einen in Strömungsrichtung der Produkte schauenden Beobachter die zu seiner Rechten befindliche Bürste (16d) im Uhrzeigersinn rotationsbetrieben und linksgängig ist und die zu seiner Linken befindliche Bürste (16g) gegen den Uhrzeigersinn rotationsbetrieben und rechtsgängig ist und die Produkte aus der Steigung mit der Rotationsgeschwindigkeit der beiden Bürsten gleich sind.

## Claims

1. Machine for continuously and uniformly coating confectionary products (11) comprising a solid or gelatinous or pasty core, coated with liquid and/or powdery products, of the type comprising a substantially horizontal fixed trough, an endless screw which is driven in rotation in this trough and means for introducing into said trough said cores and said liquid and/or powdery products, characterized in that said machine comprises one or more helicoidal brushes composed of bristles (5) implanted radially and helically on one or two drive shafts (4) which are driven in rotation in said trough (1) at a speed of less than 100 rpm and said trough which is upwardky open, which has a height greater than the diameter of said brushes and which has a cylindrical bottom which envelops said brushes in the part located beneath said drive shafts.

2. Machine according to claim 1, characterized in that it comprises two helicoidal brushes (15d, 15g) of same diameter, composed of bristles implanted radially and helically on two parallel drive shafts (16d, 16g) which are driven in rotation in opposite directions and such that the bristles of the two brushes move upwardly in the central part of the trough.

3. Machine according to any one of claims 1 and 2, characterized in that at least one of the lateral walls (20d, 20g) of said trough (14) which is swept by the brush bristles in the descending direction has a cylindrical form which extends the cylindrical bottom (19d, 19g) of said trough and which envelops at least one of said brushes (17d, 17g) in the part lying above the drive shafts (16d, 16g).

4. Machine according to any one of claims 1 to 3, characterized in that it comprises a plurality of helicoidal brushes which are composed of bristles implanted radially on the same shaft (37) in two intercalated helices, (38, 39), i.e. in two parallel helices of the same pitch which are offset axially with respect to each other.

5. Machine according to claim 2, characterized in that the two brushes (17d, 17g) have pitches of the same direction and the product of the pitch by the speed of rotation of one brush is greater than the product of the pitch by the speed of rotation of the other brush.

6. Machine according to any one of claims 1 to 5, adapted for manufacturing popcorn or the like, characterized in that it comprises a heated section in which said bristles are strands of stainless steel and in which the walls (43a) of the trough are heated to a temperature of between 120°C and 150°C.

7. Machine according to any one of claims 1 to 6 intended for cooking said products in a bath of hot oil characterized in that said trough comprises a central section (62) which is interposed between two other sections (63a, 63b) of which the bottom is located higher than the bottom of said central section and said helicoidal brush comprises a shaft made of stainless steel (61) on which are implanted strands of stainless steel which form a central brush (64) which is located in said central section and two lateral brushes (65a, 65b) which surround said central brush (64) and the strands of said central brush are longer than those of said lateral brushes.

8. Machine according to claim 6, characterized in that it comprises a second trough (73) containing a second helicoidal brush (76) which is parallel to said heated section (68a) and which is offset upwardly with respect thereto and said heated section comprises a cylindrical envelope (68a) which communicates via a lateral opening (79) with the second trough, which opening is located in the upper quarter of said cylindrical envelope which is swept on rising by the helicoidal brush of the heated section and in the lower quarter of said second trough which is swept on descending by the second helical brush.

9. Machine according to any one of claims 1 to 5, characterized in that it comprises a device for introducing said cores in the upstream end of said trough, which device comprises a conveyor belt (55) located beneath said chute, which presents the form of a cylindrical envelope (53) having a lateral opening (56) lying in a lateral wall which is swept by a brush in the descending direction and the lower edge (59) of said opening is placed against the upper face of said conveyor (55).

10. Machine according to claim 2, characterized in that the cylindrical bottom of said trough is composed of two joined portions of cylinder (19d, 19g) which each envelop a part of a brush (17d, 17g) and which form in the central part a rib in relief (21, 53) which engages between the two brushes.

11. Machine according to any one of claims 2 to 5, characterized in that it comprises a section equipped with a source of radiating heat (84) which is situated above the intermediate part between the two brushes (82g, 82d) in order to dry the coated products.

12. Machine according to any one of claims 2 to 5, characterized in that it comprises a section in which the bottom of the trough comprises perforations (87) which communicate with a sleeve (88) blowing in hot or cold air, and said section is equipped with air suction means (89) situated above said brushes, so that a current of hot or cold air flows through the products being mixed in order to dry or cool said products.

13. Machine according to any one of claims 2 to 5, characterized in that it comprises a longitudinal deflector (81) shaped as a roof with two gradients, situated above the intermediate part between the two brushes.

14. Machine according to claim 2, characterized in that for anyone observing in the flowing direction of the products, the brush (16d) situated on his right, is driven in rotation clockwise and has a left pitch, and the brush (16g) situated on his left, is driven in rotation anti-clockwise and has a right pitch and the products of the pitch by the speed of rotation of the two brushes is are equal.

_Fig. 1_

_Fig. 2_

Fig.3

IV

14

15g    17g    16g

M

18

F    17d    18    M'

15d    16d

IV

20g    15g 16g    18    16d 15d    20d

Fig.4

P    P'

14

17g    21    17d

19g    19d

22g    18    22d

20g    20d

Fig.5

14

P    P'

16d

16g

21    17d

17g    19g    19d

EP 0192012 B1

Fig.6

Fig.7

Fig.8

19

Fig. 11

Fig. 12

Fig. 9

Fig. 10

Fig. 13

Fig. 14

Fig. 15

Fig. 16

EP 0 192 012 B1

Fig.19

Fig.17

Fig.18

Fig.20

VA

VB

91g

92

91d

M'

M

XX

XX

M'

84

82d

82g

83

M

89

90

85g

85d

86

87

88

93

92

91g

91d

EP 0192012 B1

25